# EUROPÄISCHE PATENTSCHRIFT

(11) **EP 3 136 730 B1**
(45) Veröffentlichungstag und Bekanntmachung des Hinweises auf die Patenterteilung: **29.07.2020**
(21) Anmeldenummer: 16182443.8
(22) Anmeldetag: 02.08.2016
(51) Int. Cl.: H04N 19/597, H04N 19/61, G06T 9/00

(54) **ANSTEUERN EINER LICHTQUELLE UND FAHRZEUG**
CONTROL OF A LIGHT SOURCE AND VEHICLE
COMMANDE DE SOURCE DE LUMIERE ET VEHICULE

(30) Priorität: 22.08.2015 DE 102015011024
(43) Veröffentlichungstag der Anmeldung: 01.03.2017
(73) Patentinhaber: AUDI AG, 85045 Ingolstadt (DE)
(72) Erfinder: Funk, Christian, 92339 Beilngries (DE); Armbruster, Tilman, 85055 Ingolstadt (DE); Omerbegovic, Said, 65933 Frankfurt (DE); Barmeyer, Florenz, 02763 Zittau (DE); Reim, Johannes, 85072 Eichstätt (DE)

(56) Entgegenhaltungen:
- EP-A2- 1 000 806
- EP-A2- 2 777 017
- DE-A1-102008 062 639
- DE-A1-102013 016 904
- DE-A1-102014 000 495
- GB-A- 2 482 951
- A VETRO ET AL: "Overview of the Stereo and Multiview Video Coding Extensions of the H.264/MPEG-4 AVC Standard", PROCEEDINGS OF THE IEEE, Bd. 99, Nr. 4, 1. April 2011 (2011-04-01), Seiten 626-642, XP055132298, ISSN: 0018-9219, DOI: 10.1109/JPROC.2010.2098830

## Beschreibung

Die vorliegende Erfindung betrifft ein Lichtsteuergerät zum Bereitstellen eines kodierten Bildes, das über ein Datenübertragungssystem zu übertragen ist. Das Lichtsteuergerät und/oder das Datenübertragungssystem kann beispielsweise ein Datenübertragungssystem eines Fahrzeugs, einer Fertigungsanlage, eines Roboters, eines Fördersystems, einer Aufzuganlage, einer Gebäudeüberwachung oder eines medizinischen Gerätes sein. Das Datenübertragungssystem ist vorzugsweise ein serieller Datenbus, beispielsweise ein CAN-, LIN®-, FlexRay®- , MOST-, Ethernet- oder LVDS-Bus (CAN = controller area network; LIN = local interconnect network; MOST = media oriented systems transport; LVDS = low voltage differential signaling). Die Erfindung kann auch zum Ansteuern einer Lichtquelle über einen parallelen Datenbus genutzt werden. Alternativ oder zusätzlich zu den vorgenannten Möglichkeiten kann das Datenübertragungssystem auch ein Funksystem, beispielsweise nach einem Bluetooth-Standard oder nach einem WLAN-Standard umfassen (beispielsweise nach dem automotiven WLAN-Standard IEEE 802.11p). Außerdem betrifft die Erfindung ein Lichtquellen-Vor-Ort-Steuergerät zum Bereitstellen eines rasterbasierten Bildes zum Ansteuern einer Lichtquelle. Die anzusteuernde Lichtquelle ist eine hochauflösende Lichtquelle. Unter einer hochauflösenden Lichtquelle wird hier eine Lichtquelle verstanden, deren Lichtverteilung, die sie erzeugt, sehr feinstufig auswählbar und/oder anpassbar ist. Die Auswählbarkeit beziehungsweise Anpassbarkeit kann in räumlicher und/oder in zeitlicher und/oder in farblicher Hinsicht sehr feinstufig sein. Die hochauflösende Lichtquelle kann beispielsweise ein Matrix-Scheinwerfer sein, der mehrere hundert oder tausende von Licht abstrahlenden Segmenten aufweist.

Darüberhinaus betrifft die Erfindung ein Fahrzeug mit einem erfindungsgemäßen Lichtsteuergerät und/oder mit einem 02.08.2016 10:28:00 erfindungsgemäßen Lichtquellen-Vor-Ort-Steuergerät. Das Fahrzeug kann beispielsweise ein Landfahrzeug, ein Luftfahrzeug, ein Schiff, ein Personenkraftwagen, ein Lastkraftwagen, ein Bus, eine landwirtschaftliche Maschine, eine Baumaschine oder ein Aufzug sein. Das Fahrzeug kann für autonomes Fahren vorbereitet sein.

Des Weiteren betrifft die Erfindung ein Verfahren zum Ansteuern einer Lichtquelle.

Die DE 10 2008 062 640 A1 beschreibt ein Ansteuerverfahren für einen Fahrzeugscheinwerfer, der eine Mehrzahl von LED-Lichtquellen und eine Speichereinheit zum Speichern von Lichtverteilungen aufweist. Zum Verringern einer Datenverkehrsbelastung eines Fahrzeugbusses wird aus den gespeicherten Lichtverteilungen jeweils eine Lichtverteilung ausgewählt und/oder angepasst, die für die augenblickliche Fahrsituation optimal ist. Unter anderem werden folgende Auswahl- und Anpassungsmöglichkeiten der Lichtverteilung an die augenblickliche Fahrsituation vorgeschlagen: unterschiedliche Geometrien von Teillichtverteilungen, unterschiedliche Breiten und Formen von Dunkelbereichen und eine Variierbarkeit eines Schwenkwinkels für eine Kurvenlichtfunktion.

Zukünftige hochauflösende Scheinwerfer weisen tausende von lichtausstrahlenden Segmenten auf und ermöglichen damit eine Lichtabstrahlung, deren räumlicher und ggf. auch farblicher Helligkeitsverlauf viel feingliedriger und somit auch viel dynamischer an die jeweils aktuell vorhandene Fahrzeugumgebung anpassbar ist, als dies mit heutigen Lichtsystemen möglich ist. Beispielsweise kann es zweckmäßig sein, ein Kamerasystem vorzusehen, das den Ort eines Gesichts eines Fußgängers erkennen kann. Davon ausgehend kann eine Lichtsteuerung dann veranlassen, dass innerhalb einer Lichtkeule eines Scheinwerferlichts ein Raumwinkel, in dem sich das Gesicht des Fußgängers befindet (also vom Scheinwerferlicht angestrahlt würde), das Scheinwerferlicht ausgespart oder unterdrückt wird. Abgesehen von seinem Gesicht, kann der Fußgänger von dem hochauflösenden Fahrzeugscheinwerfer besonders lichtintensiv angestrahlt werden. Mit dem gezielten, blendfreien Anstrahlen des Fußgängers mit Scheinwerferlicht kann eine Verkehrssicherheit erhöht werden. Denn so wird eine Wahrscheinlichkeit dafür minimiert, dass ein Fahrer des Fahrzeugs den Fußgänger übersieht. Auch können, wie in DE 10 2014 000 495 und GB 1482951 beschrieben, ein oder mehrere Scheinwerfer des Fahrzeugs dazu vorbereitet sein, für den Fahrer und/oder für andere Verkehrsteilnehmer Verkehrshinweise (beispielsweise Geschwindigkeitsbeschränkungen, Zebrastreifen oder Warnhinweise wie Hinweise auf Kreuzungen, Gegenverkehr, Vorfahrtregelungen, Schnee- oder Eisglätte, Wildwechsel, Steinschlag und Baustellenhinweise) auf einen vorausliegenden Fahrbahnabschnitt zu projizieren. In jedem der genannten Szenarien kann es wünschenswert sein, mittels dynamischen Anpassens der räumlichen Lichtverteilung eine Relativgeschwindigkeit zwischen Fahrzeug und Fußgänger beziehungsweise eine Relativgeschwindigkeit zwischen Fahrzeug und Fahrbahn zu kompensieren. Folglich wird mit der zukünftigen Einführung von hochauflösenden Scheinwerfern die Anzahl von Lichtverteilungen, welche aus Anwendungssicht sinnvoll sind, stark steigen. Trotz sinkender Preise für Halbleiterspeicher erscheint dann ein vorbereitendes Speichern aller potentiell aufruffähigen Lichtverteilungen in Lichtsteuergeräten, wie es im erwähnten Stand der Technik vorgesehen ist, nicht mehr wirtschaftlich. Außerdem verursacht das angesprochene fortlaufende Anpassen der Lichtverteilung an die Fahrzeugumgebung (welche sich im Verlaufe einer Fahrt sehr schnell ändern kann) ein hohe Last auf dem Fahrzeugdatenbus durch Übertragen von Lichtsteuersignale zum laufenden Anpassen der Lichtverteilung. Um die dabei entstehenden Datenraten zu reduzieren, sind in DE 10 2008 062 639 und DE 10 2013 016 904 bereits einfache Verfahren der Datenreduktion eingesetzt worden.

Es ist eine Aufgabe der vorliegenden Erfindung, ein Lichtsteuergerät und ein entsprechendes Lichtquellen-Vor-Ort-Steuergerät bereitzustellen, mit denen ein Aufwand hinsichtlich eines Speicherns von Lichtverteilungen in den Steuergeräten als auch hinsichtlich einer Verkehrslast der Lichtsteuersignale auf dem Datenübertragungssystem (beispielsweise dem Datenbus) verringert werden kann. Entsprechend ist es eine Aufgabe der vorliegenden Erfindung, ein Fahrzeug mit einem solchen Lichtsteuergerät und/oder mit einem solchen Lichtquellen-Vor-Ort-Steuergerät bereitzustellen. Unabhängig davon ist es auch eine Aufgabe der vorliegenden Erfindung, ein entsprechendes Verfahren zum Ansteuern einer Lichtquelle bereitzustellen.

Diese Aufgabe wird erfindungsgemäß durch ein Lichtsteuergerät nach Patentanspruch 1, ein Lichtquellen-Vor-Ort-Steuergerät nach Patentanspruch 3, ein Fahrzeug mit erfindungsgemäßem Lichtsteuergerät und/oder erfindungsgemäßem Lichtquellen-Vor-Ort-Steuergerät nach Patentanspruch 7 und ein Verfahren nach Patentanspruch 8 gelöst.

Ein Konzept der Erfindung kann darin gesehen werden, dass vor dem Übertragen der Lichtverteilungsinformation über das Datenübertragungssystem ein Bildkodierungsverfahren auf die zu übertragende Lichtverteilungsinformation angewendet wird, wodurch einen Redundanzanteil in der Lichtverteilungsinformation verringert wird. Zum Kodieren des ersten rasterbasierten Bildes kann eines der bekannten Stand- oder Bewegtbildkodierungsverfahren (beispielsweise PNG, JPEG, H.264 oder H.265) oder ein Bildkodierverfahren verwendet werden, das zum Ansteuern der Lichtquelle speziell entwickelt, abgewandelt oder angepasst ist (PNG = portable network graphics; JPEG = joint photographic experts group). H.264 wird auch als MPEG-4/AVC bezeichnet (MPEG = moving picture experts group; AVC = advanced video coding). Für H.265 ist auch die Bezeichnung HEVC (high efficiency video coding) üblich. Grundsätzlich ist auch vorstellbar, zum Kodieren ein Bildkodierverfahren nach einem anderen MPEG-Standard zu verwenden. Durch Kodieren der zu übertragenden Lichtverteilungsinformation mittels eines Bildkodierungsverfahrens kann eine Verkehrslast auf dem Datenübertragungssystem verringert werden, ohne deswegen eine Vielfalt an auswählbaren Lichtverteilungen in unerwünschter Weise zu beschränken. Die erfindungsgemäßen Vorrichtungen und Verfahren zum Ansteuern einer Lichtquelle sind daher für zukünftige hochauflösende Scheinwerfer wesentlich besser geeignet als bekannte

Vorrichtungen und Verfahren zum Ansteuern von Fahrzeugscheinwerfern. Mittels Verwendens von Bewegungsvektoren kann eine Redundanz dadurch verringert werden, dass ein wiederholtes Übertragen solcher Bildinformation vermieden wird, die bereits übertragen wurde. Es kann von Vorteil sein, wenn der Kodierer zum Durchführen einer verlustbehafteten Kodierung ausgelegt ist. Durch Inkaufnahme von Informationsverlusten, die für einen Verkehrsteilnehmer im Beleuchtungsergebnis gar nicht oder kaum wahrnehmbar sind oder von der Anwendung her gesehen im Beleuchtungsergebnis ohne Relevanz sind, kann das kodierte Bild vorteilhafterweise mit einer höheren Datenkompression erzeugt werden, wenn in Kauf genommen wird, dass die Kodierung mit einem Informationsverlust behaftet ist. Der Informationsverlust kann beispielsweise ein globaler oder ein räumlich begrenzter Helligkeits- oder Farbunterschied oder eine zeitliche Abweichung (beispielsweise ein Jitter oder eine Asynchronität) im zeitlichen Verlauf zwischen dem ersten und dem dekodierten zweiten rasterbasierten Bild sein. Ein Informationsverlust ist im Beleuchtungsergebnis dann nicht wahrnehmbar, wenn der Unterschied zwischen dem dekodierten zweiten und dem ersten rasterbasierten Bild unterhalb einer Wahrnehmungsschwelle des Verkehrsteilnehmers liegt. Informationsverluste, die aus Anwendungssicht im Beleuchtungsergebnis ohne Relevanz sind, können beispielsweise globale Helligkeits- oder Farbweichungen sein, die der Verkehrsteilnehmer zwar grundsätzlich wahrnehmen kann, er aber nicht als störend empfindet, und die ihn beim Verstehen der jeweiligen Verkehrssituation auch nicht beeinträchtigen.

Auch entstehen Vorteile dadurch, dass der Kodierer zum Aufteilen des ersten Rasterbildes in (erste) Raster-Teilbilder und zu einem Wandeln mindestens eines der (ersten) Raster-Teilbilder in kodierte Raster-Teilbilder ausgelegt ist. Ein Aufteilen des ersten Rasterbildes in (erste) Raster-Teilbilder kann Leistungsanforderungen an den Kodierer begrenzen und zugleich eine Skalierbarkeit des Kodierers fördern. Entsprechendes gilt dann für einen Dekodierer, der dazu ausgelegt ist, die kodierten Raster-Teilbilder in dekodierte (zweite) Raster-Teilbilder rückzuwandeln.

Der Kodierer kann zum Ausführen einer Lauflängenkodierung und/oder einer diskreten Kosinustransformation und/oder einer Differenzkodierung und/oder einer Entropiekodierung und/oder zum Verwenden einer Quantisierungstabelle und/oder zum Umkodieren einer Farbinformation vorbereitet sein. Durch Anwenden einer echten oder unechten Teilmenge dieser Kodierungs- beziehungsweise Datenkompressionsverfahren (deren jeweiligen spezifischen Vorteile dem Fachmann bekannt sind) kann das erste rasterbasierte Bild effizient kodiert werden.

Die Erfindung kann im automotiven Bereich angewendet werden. Insbesondere kann die Lichtquelle eine Lichtquelle eines Fahrzeugs sein. Hierdurch können im Fahrzeugbau erhöhte Anforderungen an eine Leistungsfähigkeit solcher Datenübertragungssysteme (beispielsweise von Datenbussen) vermieden werden, die zum Übertragen von Lichtverteilungsinformation verwendet werden.

Bevorzugt ist, wenn das Lichtquellen-Vor-Ort-Steuergerät für ein Versenden einer Diagnoseinformation der Lichtquelle und/oder einer Diagnoseinformation des Lichtquellen-Vor-Ort-Steuergeräts über das Datenübertragungssystem an das Lichtsteuergerät und/oder an ein weiteres Steuergerät ausgelegt ist. Beispielsweise ist es zweckmäßig, wenn das Lichtquellen-Steuergerät von dem Lichtquellen-Vor-Ort-Steuergerät über einen Rückkanal Informationen erhält, anhand derer das Lichtquellen-Steuergerät überprüfen kann, inwieweit Lichtverteilungsinformation fehlerfrei zum Lichtquellen-Vor-Ort-Steuergerät übertragen wurde und/oder ob die Lichtquelle von dem Lichtquellen-Vor-Ort-Steuergerät wirklich so angesteuert wird, dass sie die gewünschte Lichtverteilung erzeugt. Diese Maßnahme kann einen Beitrag dafür darstellen, eine Blendung von Gegenverkehr zu vermeiden.

Die Diagnoseinformation kann beispielsweise das komplette dekodierte Bild oder einen Ausschnitt davon oder eine Prüfsumme des dekodierten Bilds oder eines Ausschnitts davon umfassen. Die Prüfsumme kann beispielsweise einen Hash-Wert oder einen CRC-Wert umfassen (CRC = cyclic redundancy check). Eine weitere Anwendung für ein Übertragen von Diagnoseinformation besteht in einer Erkennung einer zu großen Laufzeit der Lichtverteilungsinformation über das Datenübertragungssystem. Eine zu große Laufzeit kann beispielsweise entstehen, wenn eine Kodierungsbitrate zu hoch ist. Das Lichtquellen-Vor-Ort-Steuergerät kann die Laufzeit berechnen, wenn die Lichtverteilungsinformation mit einem Versandzeitstempel versendet wird. Alternativ oder zusätzlich kann das Lichtquellensteuergerät die Laufzeit selbst berechnen, wenn das Lichtquellen-Vor-Ort-Steuergerät dem Lichtquellen-Steuergerät über einen Rückkanal Empfangszeitstempel für empfangene Lichtverteilungsinformation liefert und das Lichtquellen-Steuergerät die Empfangszeitstempel eindeutig den jeweils zugehörigen versandten Lichtverteilungsinformationen zuordnen kann. Eine eindeutige Zuordnung der Empfangszeitstempel zu der versandten Lichtverteilungsinformation ist beispielsweise dann möglich, wenn, versandte Lichtverteilungsinformation zusammen mit einem Laufindex oder einer Zeitinformation versendet wird und das Lichtquellen-Vor-Ort-Steuergerät den Laufindex oder die Zeitinformation oder einen Hash-Wert des Laufindex oder der Zeitinformation zusammen mit dem Empfangszeitstempel über den Rückkanal an das Lichtquellen-Steuergerät zurücküberträgt. Wenn das Lichtquellen-Steuergerät eine zu große Laufzeit feststellt, kann es das Lichtquellen-Vor-Ort-Steuergerät anweisen, in einen unkritischen, statischen Lichtverteilungsmodus zu wechseln. Unabhängig davon kann die Diagnoseinformation auch Hardwareinformationen, wie Fertigungsnummern, Temperaturwerte, Betriebszeiten, Alterungsparameter und Fehlercodes umfassen.

Die Erfindung sieht vor, dass das Lichtquellen-Vor-Ort-Steuergerät dazu ausgelegt ist, über einen Chroma-Kanal Steuersignale statt Farbinformation zu empfangen und zu verwenden, und/oder dazu ausgelegt ist, über den Chroma-Kanal Helligkeitssignale statt Farbinformation zu empfangen und zum Ansteuern der Lichtquelle zu verwenden. Das Lichtquellen-Steuergerät ist dann dazu ausgelegt, einen Chroma-Kanal statt zum Kodieren und Versenden von Farbinformation zum Kodieren und Versenden von Steuersignalen und/oder zum Kodieren und Versenden von Helligkeitssignalen zu nutzen. In Chroma-Kanälen wird Farbinformation üblicherweise mit einer niedrigeren Auflösung übertragen als im Luma-Kanal. Für viele Lichtquellen reicht die niedrigere Auflösung der Chroma-Kanäle zur Ansteuerung der Lichtquelle aus. Beispielsweise kann je einer von zwei Chroma-Kanälen eines Bildkodierverfahrens zum Übertragen von Luminanzinformation für je eine Lichtquelle verwendet werden. Die in dieser Weise angesteuerte Lichtquelle kann ein Hilfsscheinwerfer, beispielsweise ein Nebelscheinwerfer oder einer der beiden Hauptscheinwerfer eines Fahrzeugs sein.

Unabhängig davon kann es von Vorteil sein, wenn das Lichtquellen-Vor-Ort-Steuergerät dazu ausgelegt ist, mittels einer MVC-Protokollkomponente Steuersignale statt Information für eine zusätzliche Ansicht zu empfangen, und/oder dazu ausgelegt ist, mittels einer MVC-Protokollkomponente Helligkeitssignale statt Information für eine zusätzliche Ansicht zu empfangen und zum Ansteuern der Lichtquelle zu verwenden (MVC = multiview video coding). Das Lichtsteuergerät ist dann dazu ausgelegt, eine MVC-Protokollkomponente statt zum Kodieren und Versenden von Informationen einer zusätzlichen Ansicht zum Kodieren und Versenden von Steuersignalen und/oder zum Kodieren und Versenden von Helligkeitssignalen zu nutzen. Mittels einer MVC-Protokollkomponente wird Information für eine zusätzliche Ansicht üblicherweise mit einer niedrigeren Auflösung übertragen als für die zugehörige Basisansicht. Für viele Lichtquellen reicht die niedrigere Auflösung der MVC-Protokollkomponente zur Ansteuerung der Lichtquelle aus. Beispielsweise kann eine MVC-Protokollkomponente je einer zusätzliche Ansicht zum Übertragen von Luminanzinformation für je eine Lichtquelle verwendet werden. Die in dieser Weise jeweils angesteuerte Lichtquelle kann ein Hilfsscheinwerfer, beispielsweise ein Nebelscheinwerfer oder einer der beiden Hauptscheinwerfer eines Fahrzeugs sein.

Die Lichtquelle kann beispielsweise ein Scheinwerfer eines Fahrzeugs sein. Die Erfindung ist zum Ansteuern von hochauflösenden Scheinwerfern, beispielsweise hochauflösenden Matrix-Scheinwerfern, nützlich. Der Scheinwerfer kann ein Frontscheinwerfer, ein Rückfahrscheinwerfer und/oder ein Suchscheinwerfer sein.

Die vorliegende Erfindung wird nun anhand der beigefügten Zeichnungen näher erläutert. Dabei zeigen:
- Fig. 1: ein schematisches Blockschaltbild eines Fahrzeugs mit einem Lichtsteuergerät, einem Datenübertragungssystem und einem Lichtquellen-Vor-Ort-Steuergerät; und
- Fig. 2: schematisch einen Ablauf eines Verfahrens zum Ansteuern einer Lichtquelle.

Die nachfolgend näher beschriebenen Ausführungsbeispiele stellen bevorzugte Ausführungsformen der vorliegenden Erfindung dar.

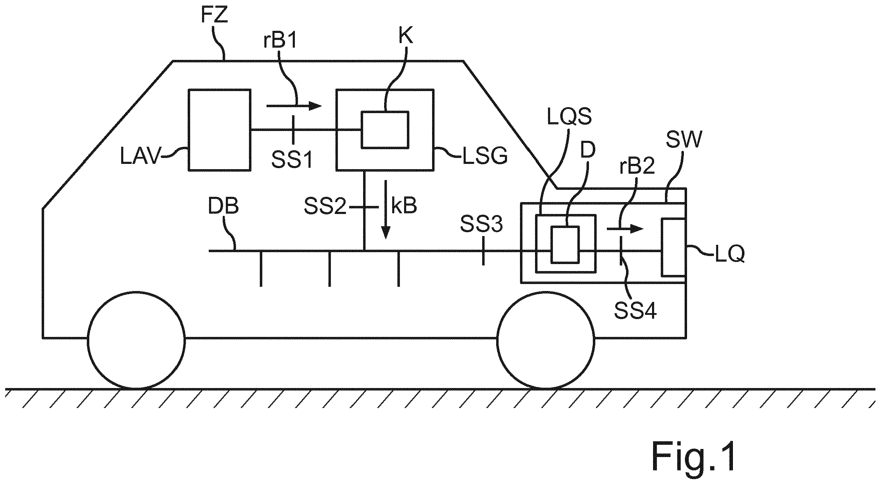

Das in der Fig. 1 gezeigte Fahrzeug FZ umfasst eine Lichtassistenzvorrichtung LAV, ein Lichtsteuergerät LSG, ein Datenübertragungssystem DB und einen Scheinwerfer SW. Der Scheinwerfer SW umfasst eine Lichtquellen-Vor-Ort-Steuerung LQS und eine hochauflösende Lichtquelle LQ. Typischerweise ist die hochauflösende Lichtquelle LQ in Matrix-Technologie ausgeführt. Die Lichtassistenzvorrichtung LAV ist dazu vorbereitet, als Beleuchtungsvorgabe erste rasterbasierte Bilder rB1 zu erzeugen und dem Lichtsteuergerät LSG an einer ersten Schnittstelle SS1 bereitzustellen.

Das Lichtsteuergerät LSG weist einen Kodierer K zum Kodieren der ersten rasterbasierten Bilder rB1 in kodierte Bilder kB auf. Das Lichtsteuergerät LSG ist dazu vorbereitet, die kodierten Bilder kB zum Einspeisen in das Datenübertragungssystem DB an einer zweiten Schnittstelle SS2 bereitzustellen.

Das Datenübertragungssystem DB ist vorzugsweise ein serieller Datenbus, beispielsweise ein CAN-, LIN®-, FlexRay®- , MOST-, Ethernet- oder LVDS-Bus (CAN = controller area network; LIN = local interconnect network; MOST = media oriented systems transport; LVDS = low voltage differential signaling). Die Erfindung kann auch zum Ansteuern von einer oder mehreren Lichtquellen LQ über einen parallelen Bus genutzt werden. Alternativ oder zusätzlich zu den vorgenannten Möglichkeiten kann das Datenübertragungssystem DB ein Funksystem, beispielsweise nach einem Bluetooth-Standard oder nach einem WLAN-Standard (beispielsweise dem automotiven WLAN-p-Standard) umfassen.

Die Lichtquellen-Vor-Ort-Steuerung LQS ist dazu vorbereitet, die kodierten Bilder kB über eine dritte Schnittstelle SS3 aus dem Datenübertragungssystem DB zu übernehmen, mittels des Dekodierers D zu dekodieren und das Dekodierungsergebnis der Lichtquelle LQ als dekodierte zweite rasterbasierte Bilder rB2 an einer vierten Schnittstelle SS4 bereitzustellen.

Der Kodierer K kann zum Durchführen einer verlustbehafteten oder zum Durchführen einer nicht verlustbehafteten Kodierung vorbereitet sein. Auch entstehen Vorteile, wenn der Kodierer K zum Aufteilen des ersten Rasterbildes rB1 in (erste) Raster-Teilbilder und zu einem teilbildspezifischen Wandeln mindestens eines der (ersten) Raster-Teilbilder in kodierte Raster-Teilbilder vorbereitet ist. Unabhängig davon kann der Kodierer K zum Ausführen einer Lauflängenkodierung und/oder einer diskreten Kosinustransformation und/oder einer Differenzkodierung und/oder einer Entropiekodierung und/oder zum Verwenden einer Quantisierungstabelle und/oder zum Umkodieren einer Farbinformation vorbereitet sein. Durch Anwenden einer echten oder unechten Teilmenge dieser Kodierungsbeziehungsweise Datenkompressionsverfahren, kann das erste rasterbasierte Bild rB1 effizient kodiert werden. Eine davon unabhängige Weiterbildung sieht vor, dass der Kodierer K zum Erzeugen eines Bewegungsvektors vorbereitet ist. Mittels Verwendens von Bewegungsvektoren kann wiederholtes Übertragen vieler Bildinformation vermieden werden.

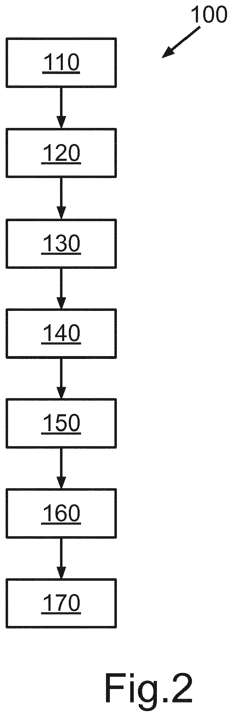

Das in Fig. 2 gezeigte Verfahren 100 zum Ansteuern einer Lichtquelle LQ weist folgende Schritte auf. In einem ersten Schritt 110 wird ein erstes Rasterbild rB1 entgegengenommen. In einem zweiten Schritt 120 wird das erste Rasterbild rB1 in ein kodiertes Bild kB gewandelt, dessen Redundanz geringer ist als eine Redundanz des ersten Rasterbildes rB1. In einem dritten Schritt 130 wird das kodierte Bild kB an das Datenübertragungssystem DB ausgegeben. In einem vierten Schritt 140 wird das kodierte Bild kB über das Datenübertragungssystem DB übertragen. In einem fünften Schritt 150 wird das kodierte Bild kB von dem Datenübertragungssystem DB empfangen. In einem sechsten Schritt 160 wird das kodierte Bild kB in ein dekodiertes zweites Rasterbild rB2 rückgewandelt, das eine höhere Redundanz aufweist als das kodierte Bild kB. In einem siebten Schritt 170 wird das dekodierte zweite Rasterbild rB2 an die Lichtquelle LQ ausgegeben.

Eine Anwendung der Erfindung ist insbesondere im automotiven Bereich von Vorteil. Insbesondere kann die Lichtquelle LQ eine Lichtquelle LQ eines Fahrzeugs FZ sein. Hierdurch können im Fahrzeugbau erhöhte Anforderungen an die Leistungsfähigkeit eines Datenübertragungssystems DB vermieden werden, das zwischen einem Lichtsteuergerät LSG und der Lichtquelle LQ zum Übertragen von Lichtverteilungsinformation verwendet wird.

## Patentansprüche

1. Lichtsteuergerät (LSG) zum Bereitstellen eines kodierten Bildes (kB) zum Übertragen (140) über ein Datenübertragungssystem (DB), wobei das Lichtsteuergerät (LSG) aufweist:
- eine erste Schnittstelle (SS1) zum Entgegennehmen (110) eines ersten Rasterbildes (rB1) als Beleuchtungsvorgabe mit einer Lichtverteilungsinformation für eine hochauflösende Lichtquelle eines Scheinwerfers;
- einen Kodierer (K) zum Wandeln (120) des ersten Rasterbildes (rB1) in das kodierte Bild (kB), dessen Redundanz geringer ist als eine Redundanz des ersten Rasterbildes (rB1), mittels eines Bildkodierungsverfahrens; und
- eine zweite Schnittstelle (SS2) zum Ausgeben (130) des kodierten Bildes (kB) an das Datenübertragungssystem (DB),
- wobei der Kodierer (K) einerseits zum Aufteilen des ersten Rasterbildes (rB1) in erste Raster-Teilbilder und zu einem Wandeln mindestens eines der Raster-Teilbilder in kodierte Raster-Teilbilder ausgelegt ist und/oder der Kodierer (K) andererseits zum Erzeugen eines Bewegungsvektors ausgelegt ist;
- wobei das Lichtsteuergerät dazu ausgelegt ist, über einen Chroma-Kanal des Bildkodierungsverfahrens, anstelle von Farbinformation, Steuersignale und/oder Helligkeitssignale zu kodieren und zu versenden.

2. Lichtsteuergerät (LSG) nach einem der vorhergehenden Ansprüche, **dadurch gekennzeichnet, dass** der Kodierer (K) zum Ausführen einer Lauflängenkodierung und/oder einer diskreten Kosinustransformation und/oder einer Differenzkodierung und/oder einer Entropiekodierung und/oder zum Verwenden einer Quantisierungstabelle und/oder zum Umkodieren einer Farbinformation ausgelegt ist.

3. Lichtquellen-Vor-Ort-Steuergerät (LQS) zum Bereitstellen eines dekodierten zweiten rasterbasierten Bildes (rB2) als Beleuchtungsvorgabe mit einer Lichtverteilungsinformation zum Ansteuern einer hochauflösenden Lichtquelle (LQ) eines Scheinwerfers, wobei das Lichtquellen-Vor-Ort-Steuergerät (LQS) aufweist:
- eine dritte Schnittstelle (SS3) zum Empfangen (170) eines kodierten Bildes (kB), das mittels eines der Lichtsteuergeräte (LSG) der vorhergehenden Ansprüche kodiert wurde;
- einen Dekodierer (D) zum Rückwandeln (160) des kodierten Bildes (kB) in ein dekodiertes zweites rasterbasiertes Bild (rB2), das eine höhere Redundanz aufweist als das kodierte Bild (kB); und
- eine vierte Schnittstelle (SS4) zum Ausgeben (170) des dekodierten zweiten rasterbasierten Bildes an die Lichtquelle (LQ),
- wobei einerseits das kodierte Bild (kB) kodierte Raster-Teilbilder darstellt und der Dekodierer (D) dazu ausgelegt ist, die kodierten Raster-Teilbilder in dekodierte zweite Raster-Teilbilder rückzuwandeln und/oder andererseits der Dekodierer (D) zum Verwenden eines Bewegungsvektors ausgelegt ist;
- wobei das Lichtquellen-Vor-Ort-Steuergerät (LQS) dazu ausgelegt ist, über einen Chroma-Kanal des Bildkodierungsverfahrens, anstelle von Farbinformation, Steuersignale und/oder Helligkeitssignale zu empfangen und zum Ansteuern der Lichtquelle (LQ) zu verwenden.

4. Lichtquellen-Vor-Ort-Steuergerät (LQS) nach dem vorhergehenden Anspruch, **dadurch gekennzeichnet, dass** die Lichtquelle (LQ) eine Lichtquelle (LQ) eines Fahrzeugs (FZ) ist.

5. Lichtquellen-Vor-Ort-Steuergerät (LQS) nach Anspruch 3 oder 4, **dadurch gekennzeichnet, dass** Lichtquellen-Vor-Ort-Steuergerät (LQS) für ein Versenden einer Diagnoseinformation der Lichtquelle (LQ) und/oder einer Diagnoseinformation des Lichtquellen-Vor-Ort-Steuergeräts (LQS) über das Datenübertragungssystem (DB) an das Lichtsteuergerät (LSG) und/oder an ein weiteres Steuergerät (SG) ausgelegt ist.

6. Lichtquellen-Vor-Ort-Steuergerät (LQS) nach einem der Ansprüche 3 bis 5, **dadurch gekennzeichnet, dass** das Lichtquellen-Vor-Ort-Steuergerät (LQS) dazu ausgelegt ist, mittels einer Multiview-Video-Coding-Protokollkomponente zum Übertragen von Information für eine zusätzliche Ansicht Steuersignale und/oder Helligkeitssignale statt der Information für die zusätzliche Ansicht zu empfangen und zum Ansteuern der Lichtquelle (LQ) zu verwenden.

7. Fahrzeug (FZ),
**dadurch gekennzeichnet, dass**
das Fahrzeug (FZ) ein Lichtsteuergerät (LSG) nach einem der Ansprüche 1 bis 2 und/oder ein Lichtquellen-Vor-Ort-Steuergerät (LQS) nach einem der Ansprüche 3 bis 6 aufweist.

8. Verfahren (100) zum Ansteuern einer hochauflösenden Lichtquelle (LQ) eines Scheinwerfers, wobei das Verfahren (100) Folgendes aufweist:
- Entgegennehmen (110) eines ersten Rasterbildes (rB1) als Beleuchtungsvorgabe mit einer Lichtverteilungsinformation für die Lichtquelle;
- durch einen Kodierer (K) Wandeln (120) des ersten Rasterbildes (rB1) in ein kodiertes Bild (kB), dessen Redundanz geringer ist als eine Redundanz des ersten Rasterbildes (rB1), mittels eines Bildkodierungsverfahrens;
- Ausgeben (130) des kodierten Bildes (kB) an ein Datenübertragungssystem (DB);
- Übertragen (140) des kodierten Bildes (kB) über das Datenübertragungssystem (DB);
- Empfangen (150) des kodierten Bildes (kB) von dem Datenübertragungssystem;
- Rückwandeln (160) des kodierten Bildes (kB) in ein dekodiertes zweites Rasterbild (rB2), das eine höhere Redundanz aufweist als das kodierte Bild (kB); und
- Ausgeben (170) des dekodierten zweiten Rasterbildes (rB2) an die Lichtquelle (LQ),
- wobei über einen Chroma-Kanal des Bildkodierungsverfahrens, anstelle von Farbinformation, Steuersignale und/oder Helligkeitssignale übertragen werden;
- wobei der Kodierer (K) einerseits das erste Rasterbild (rB1) in erste Raster-Teilbilder aufteilt und mindestens eines der ersten Raster-Teilbilder in kodierte Raster-Teilbilder wandelt und/oder der Kodierer (K) andererseits einen Bewegungsvektor erzeugt.

## Claims

1. Light control apparatus (LSG) for providing an encoded image (kB) for transmission (140) via a data transfer system (DB), wherein the light control apparatus (LSG) has:
- a first interface (SS1) for receiving (110) a first raster image (rB1) as an illumination specification with a light distribution information for a high-resolution light source of a headlamp;
- an encoder (K) for transforming (120) the first raster image (rB1) into the encoded image (kB), the redundancy of which is less than a redundancy of the first raster image (rB1), by means of an image encoding method; and
- a second interface (SS2) for outputting (130) the encoded image (kB) to the data transfer system (DB),
- wherein the encoder (K) on the one hand is designed to divide the first raster image (rB1) into first raster partial images and for a transforming of at least one of the raster partial images into encoded raster partial images and/or the encoder (K) on the other hand is designed to generate a motion vector;
- wherein the light control apparatus is designed by means of a chroma channel of the image encoding method to encode and to send control signals and/or brightness signals instead of colour information.

2. Light control apparatus (LSG) according to any of the preceding claims, **characterised in that** the encoder (K) is designed to carry out a run length encoding and/or a discrete cosine transformation and/or a differential encoding and/or an entropy encoding and/or for using a quantisation table and/or for recoding a colour information.

3. Light sources local control apparatus(LQS) for providing a decoded second raster-based image (rB2) as an illumination specification with light distribution information for controlling a high-resolution light source (LQ) of a headlamp, wherein the light source local control apparatus (LQS) has:
- a third interface (SS3) for receiving (170) an encoded image (kB) which was encoded by means of one of the light control apparatuses (LSG) of the preceding claims;
- a decoder (D) for reconverting (160) the encoded image (kB) into a decoded second raster-based image (rB2) which has a higher redundancy than the encoded image (kB); and
- a fourth interface (SS4) for outputting (170) the decoded second raster-based image to the light source (LQ),
- wherein on the one hand the encoded image (kB) represents encoded raster partial images and the decoder (D) is designed to reconvert the encoded raster partial images into decoded second raster partial images and/or on the other hand the decoder (D) is designed to use a motion vector;
- wherein the light sources local control apparatus (LQS) is designed to receive, by means of a chroma channel of the image encoding method, control signals and/or brightness signals instead of colour information, and to use them to control the light source (LQ).

4. Light sources local control apparatus(LQS) according to the preceding claims, **characterised in that** the light source (LQ) is a light source (LQ) of a vehicle (FZ).

5. Light sources local control apparatus (LQS) according to claim 3 or 4, **characterised in that** light sources local control apparatus (LQS) is designed for sending a diagnostic information of the light source (LQ) and/or a diagnostic information of the light sources local control apparatus (LQS) via the data transmission system (DB) to the light control apparatus (LSG) and/or to a further control apparatus (SG).

6. Light sources local control apparatus (LQS) according to any of claims 3 to 5, **characterised in that** the light sources local control apparatus (LQS) is designed, for the transmission, by means of a multiview video coding protocol component, of information for an additional view, to receive control signals and/or brightness signals instead of the information for the additional view and to use them for controlling the light source (LQ).

7. Vehicle (FZ),
**characterised in that**
the vehicle (FZ) has a light control apparatus (LSG) according to any of claims 1 to 2 and/or a light sources local control apparatus (LQS) according to any of claims 3 to 6.

8. Method (100) for controlling a high definition light source (LQ) of a headlamp, wherein the method (100) has the following:
- reception (110) of a first raster image (rB1) as an illumination specification with a light distribution information for the light source;
- by means of an encoder (K) converting (120) the first raster image (rB1) into an encoded image (kB), the redundancy of which is less than a redundancy of the first raster image (rB1), by means of an image encoding method;
- outputting (130) of the encoded image (kB) to a data transfer system (DB);
- transmitting (140) the encoded image (kB) via the data transfer system (DB);
- receiving (150) the encoded image (kB) from the data transfer system;
- reconverting (160) the encoded image (kB) into a decoded second raster image (rB2), which has a higher redundancy than the encoded image (kB), and
- outputting (170) the decoded second raster image (rB2) to the light source (LQ),
- wherein via a chroma channel of the image encoding method, control signals and/or brightness signals are transmitted instead of colour information;
- wherein the encoder (K) on the one hand divides the first raster image (rB1) into first raster partial images and converts at least one of the first raster partial images into encoded raster partial images and/or the encoder (K) on the other hand generates a motion vector.

## Revendications

1. Dispositif de commande de lumière (LSG) pour fournir une image codée (kB) pour la transmission (140) par l'intermédiaire d'un système de transmission de données (DB), le dispositif de commande de lumière (LSG) comprenant :
- une première interface (SS1) pour recevoir (110) une première image tramée (rB1) comme spécification d'éclairage avec une information de distribution de lumière pour une source lumineuse haute résolution d'un phare :
- un codeur (K) pour convertir (120) la première image tramée (rB1) en l'image codée (kB) dont la redondance est inférieure à une redondance de la première image tramée (rB1) au moyen d'un procédé de codage d'image ; et
- une deuxième interface (SS2) pour émettre (130) l'image codée (kB) vers le système de transmission de données (DB),
- dans lequel le codeur (K) est conçu d'une part pour diviser la première image tramée (rB1) en premières images partielles tramées et pour convertir au moins une des images partielles tramées en images partielles tramées codées et/ou le codeur (K) est conçu d'autre part pour générer un vecteur de mouvement ;
- dans lequel le dispositif de commande de lumière est conçu pour coder et transmettre des signaux de contrôle et/ou des signaux de luminosité au lieu d'informations de couleur par l'intermédiaire d'un canal chromatique du procédé de codage d'image.

2. Dispositif de commande de lumière (LSG) selon l'une quelconque des revendications précédentes, **caractérisé en ce que** le codeur (K) est conçu pour effectuer un codage de longueur de parcours et/ou une transformation en cosinus discrète et/ou un codage différentiel et/ou un codage d'entropie et/ou pour utiliser une table de quantification et/ou pour recoder une information de couleur.

3. Dispositif de commande local de sources lumineuses (LQS) pour fournir une deuxième image tramée décodée (rB2) comme spécification d'éclairage avec une information de distribution de lumière pour commander une source lumineuse (LQ) haute résolution d'un phare, dans lequel le dispositif de commande local de sources lumineuses (LQS) comprend :
- une troisième interface (SS3) pour recevoir (170) une image codée (kB), codée au moyen d'un des dispositifs de commande de lumière (LSG) des revendications précédentes ;
- un décodeur (D) pour reconvertir (160) l'image codée (kB) en une deuxième image tramée décodée (rB2) ayant une redondance plus élevée que l'image codée (kB) ; et
- une quatrième interface (SS4) pour émettre (170) la deuxième image tramée décodée vers la source lumineuse (LQ),
- dans laquelle, d'une part, l'image codée (kB) représente des trames codées et le décodeur (D) est conçu pour reconvertir les images partielles tramées en deuxièmes images partielles tramées décodées et/ou, d'autre part, le décodeur (D) est conçu pour utiliser un vecteur de mouvement ;
- dans lequel le dispositif de commande local de sources lumineuses (LQS) est conçu pour recevoir des signaux de commande et/ou des signaux de luminosité au lieu d'informations de couleur par l'intermédiaire d'un canal chromatique du procédé de codage d'image et pour commander la source lumineuse (LQ).

4. Dispositif de commande local de sources lumineuses (LQS) selon la revendication précédente, **caractérisé en ce que** la source lumineuse (LQ) est une source lumineuse (LQ) d'un véhicule (FZ).

5. Dispositif de commande local de sources lumineuses (LQS) selon la revendication 3 ou 4, **caractérisé en ce que** le dispositif de commande local de sources lumineuses (LQS) est conçu pour envoyer une information de diagnostic de la source lumineuse (LQ) et/ou une information de diagnostic du dispositif de commande local de sources lumineuses (LQS) par l'intermédiaire du système de transmission de données (DB) dispositif de commande de lumière (LSG) et/ou à un autre dispositif de commande (SG).

6. Dispositif de commande local de sources lumineuses (LQS) selon l'une quelconque des revendications 3 à 5, **caractérisé en ce que** le dispositif de commande local de sources lumineuses (LQS) est conçu pour recevoir des signaux de commande et/ou des signaux de luminosité au lieu de l'information pour la vue supplémentaire au moyen d'un composant de protocole de codage vidéo multi-vues pour transmettre une information pour une vue supplémentaire et pour commander la source lumineuse (LQ).

7. Véhicule (FZ),
**caractérisé en ce que**
le véhicule (FZ) comprend un dispositif de commande de lumière (LSG) selon l'une quelconque des revendications 1 à 2 et/ou un dispositif de commande local de sources lumineuses (LQS) selon l'une quelconque des revendications 3 à 6.

8. Procédé (100) de commande d'une source lumineuse (LQ) haute résolution d'un phare, le procédé (100) consistant à :
- recevoir (110) une première image tramée (rB1) comme spécification d'éclairage avec une information de distribution de lumière pour la source lumineuse ;
- au moyen d'un codeur (K), convertir (120) la première image tramée (rB1) en une image codée (kB) dont la redondance est inférieure à une redondance de la première image tramée (rB1) au moyen d'un procédé de codage d'image ;
- émettre (130) l'image codée (kB) vers un système de transmission de données(DB) ;
- transmettre (140) l'image codée (kB) par l'intermédiaire du système de transmission de données (DB) ;
- recevoir (150) l'image codée (kB) du système de transmission de données ;
- reconvertir (160) l'image codée (kB) en une deuxième image tramée décodée (rB2) ayant une redondance plus élevée que l'image codée (kB) ; et
- émettre (170) la deuxième image tramée décodée (rB2) vers la source lumineuse (LQ),
- dans lequel des signaux de commande et/ou des signaux de luminosité au lieu d'informations de couleur sont transmis par l'intermédiaire d'un canal chromatique du procédé de codage d'image ;
- dans lequel le codeur (K) d'une part divise la première image tramée (rB1) en premières images partielles tramées et convertit au moins une des images partielles tramées en images partielles tramées codées et/ou le codeur (K) d'autre part génère un vecteur de mouvement.
